**Europäisches Patentamt**

**European Patent Office**

**Office européen des brevets**

(19)

(11) Veröffentlichungsnummer : **0 589 912 B1**

(12) # EUROPÄISCHE PATENTSCHRIFT

(45) Veröffentlichungstag der Patentschrift :
**09.08.95 Patentblatt 95/32**

(21) Anmeldenummer : **92910485.9**

(22) Anmeldetag : **23.05.92**

(86) Internationale Anmeldenummer :
**PCT/DE92/00417**

(87) Internationale Veröffentlichungsnummer :
**WO 92/22956 23.12.92 Gazette 92/32**

(51) Int. Cl.⁶ : **H02M 3/337**

(54) **SCHALTREGLER.**

(30) Priorität : **19.06.91 DE 4120146**

(43) Veröffentlichungstag der Anmeldung :
**06.04.94 Patentblatt 94/14**

(45) Bekanntmachung des Hinweises auf die
Patenterteilung :
**09.08.95 Patentblatt 95/32**

(84) Benannte Vertragsstaaten :
**BE DE FR GB IT NL**

(56) Entgegenhaltungen :
**EP-A- 0 077 958**
**EP-A- 0 355 333**
**DE-A- 2 501 527**
**DE-A- 2 941 009**
**DE-A- 3 812 861**
**US-A- 4 980 813**

(73) Patentinhaber : **ANT Nachrichtentechnik
GmbH
Gerberstrasse 33
D-71522 Backnang (DE)**

(72) Erfinder : **OHMS, Franz
Reuteweg 14
D-7163 Oberrot (DE)**

## Beschreibung

Die Erfindung geht aus von einem Schaltregler mit einem als Resonanzwandler ausgebildeten Gegentaktwandler, dem ein getakteter Vorregler vorgeschaltet ist, wobei getrennte Primärwicklungen für den Gegentakt-Transformator vorgesehen sind. Ein solcher Schaltregler ist aus der DE 38 12 861 bekannt.

Resonanzwandler dieser Art sind beispielsweise bekannt aus Proceedings of the XVth International PCI Conference, Juni 1988, Intertec Communications, Ventura, Calif., USA, Seiten 94 bis 122.

Aus der DE 29 41 009 C2 ist es bekannt einem herkömmlichen Gegentaktwandler einen Serien-Schaltregler vorzuschalten insbesondere für den Zweck, daß stark variierende Eingangsspannungen, wie beispielsweise bei Satelliten-Stromversorgungen, zu verarbeiten sind. Der Serien-Schaltregler wird üblicherweise in Abhängigkeit der Schaltregler-Ausgangsspannung pulsbreitenmoduliert. Der nachgeschaltete Gegentaktwandler wird entweder mit Gegentaktimpulsen konstanter Dauer oder ebenfalls mit pulsbreitenmodulierten Impulsen betrieben.

Aufgabe der Erfindung ist es den Schaltregler eingangs genannter Art so auszubilden, daß ein hoher Wirkungsgrad erreichbar ist. Diese Aufgabe wird durch die Merkmale des Patentanspruchs 1 gelöst. Die Unteransprüche zeigen vorteilhafte Ausgestaltungen der Erfindung auf.

Der Schaltregler nach der Erfindung besitzt den Vorteil, daß die Kapazität des entsprechenden Resonanzkondensators größer gewählt werden kann als bei herkömmlichen Resonanz- oder Quasiresonanzwandlern. Für das Nachladen eines Resonanzkondensators steht ausreichend Zeit zur Verfügung, nämlich jeweils die Zeit während der der jeweilige Gegentaktschalter geöffnet ist und die Lückzeit. Der Transformator des Gegentaktwandlers wird besser ausgenutzt als bei vergleichbaren anderen Resonanzwandlern, d.h. bei gleicher Leistung kann das Bauvolumen reduziert werden. Dies ist insbesondere für Anwendungen in Satelliten von Vorteil. Die Regelung der beiden Hochsetzsteller ist sehr zuverlässig, da das Regelkriterium aus getrennten Zweigen des Gegentaktwandlers gewonnen wird. Durch die Addition der Spannungen an den Resonanzkondensatoren für die Regelung der Hochsetzsteller werden Störsignale (Ripple) stark unterdrückt.

Anhand der Zeichnungen wird ein Ausführungsbeispiel der Erfindung nun näher erläutert. Es zeigen

Figur 1 ein Prinzipschaltbild eines Schaltreglers nach der Erfindung,

Figur 2 zeitliche Verläufe ausgewählter Signale für den Schaltregler nach Figur 1,

Figur 3 ein Ersatzschaltbild des Gegentaktwandlers für einen der Gegentaktzweige,

Figur 4 den Umschwingstrom des Gegentaktwandlers für unterschiedliche Bauelemente-Dimensionierungen.

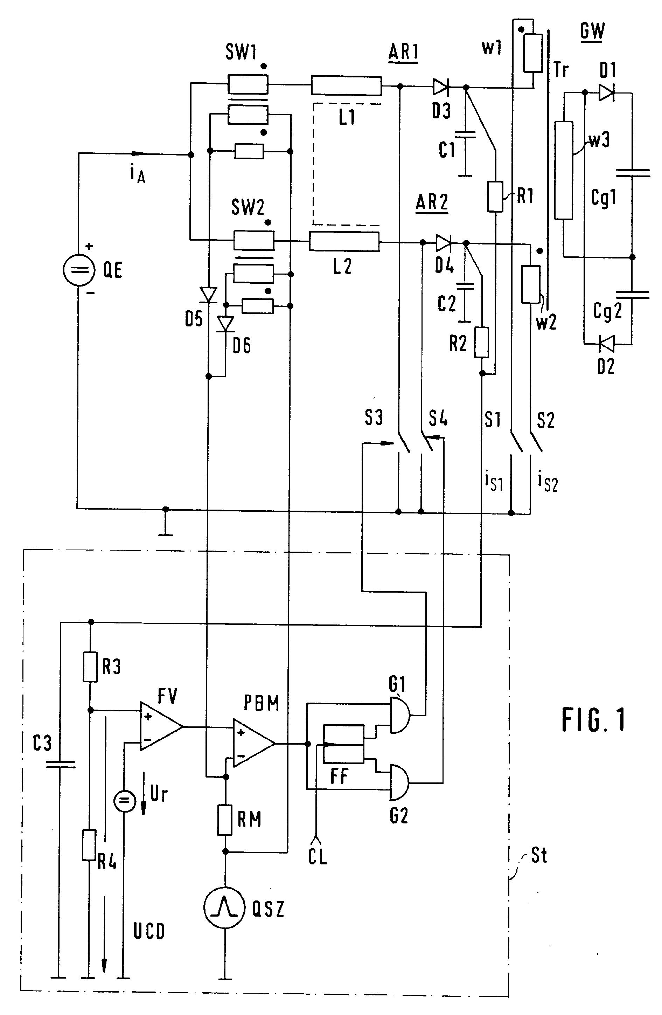

In Figur 1 sind zwei von einer Eingangsgleichspannungsquelle QE parallel gespeiste Hochsetzsteller AR1, AR2 (Boostregler) - dargestellt, denen ein Parallel-Gegentaktgleichspannungswandler GW nachgeschaltet ist. Die Hochsetzsteller AR1 und AR2 umfassen jeweils ein Stellglied im Querzweig, hier durch die Schalter S3 und S4 symbolisiert, und eine Längsinduktivität L1 bzw. L2 mit in Serie geschalteter Diode D3 bzw. D4. Die Ausgänge der Hochsetzsteller AR1 und AR2 weisen jeweils einen Kondensator C1 bzw. C2 im Querzweig auf. Die Längsinduktivitäten L1 und L2 können magnetisch voneinander getrennt oder leicht gekoppelt sein. Der Gegentaktwandler GW umfaßt einen Leistungstransformator Tr mit zwei voneinander galvanisch getrennten Primärwicklungen wl und w2 und einer Sekundärwicklung w3. Der Ausgang jedes Hochsetzstellers AR1, bzw. AR2 ist mit einem Gegentaktzweig des Gegentaktwandlers CW verbunden. Im Ausführungsbeispiel gemäß Figur 1 ist dies dadurch realisiert, daß die Diode D3 des Hochsetzstellers AR1 in Serie zur Primärwicklung wl und die Diode D4 des Hochsetzstellers AR2 in Serie zur Primärwicklung w2 geschaltet ist. Im Ausgangskreis des Gegentaktwandlers GW sind zwei Gleichrichterkreise mit Dioden D1, D2 und Glättungskondensatoren Cg1 und Cg2 dargestellt. Die beiden Gegentaktschalter S1 und S2 des Gegentaktwandlers sind jeweils in Serie zu einer der Primärwicklungen w1 bzw. w2 angeordnet. Der Wicklungssinn der Primärwicklungen wl und w2 ist in Figur 1 durch Punkte markiert. Zur Ausbildung des Gegentaktwandlers als Resonanzwandler sind im Gegensatz zu üblichen Lösungen zwei Resonanzkondensatoren C1 und C2 vorgesehen. Diese Resonanzkondensatoren C1, C2 bilden gleichzeitig die Ausgangskondensatoren der Hochsetzsteller AR1 und AR2. Sie liegen bezüglich der Gegentaktzweige jeweils parallel zur Serienschaltung gebildet aus Primärwicklung wl bzw. w2 und Gegentaktschalter S1 bzw. S2. Die Resonanzkondensatoren können als Alternativausführung auch an anderer Stelle in den Gegentaktzweigen angeordnet werden.

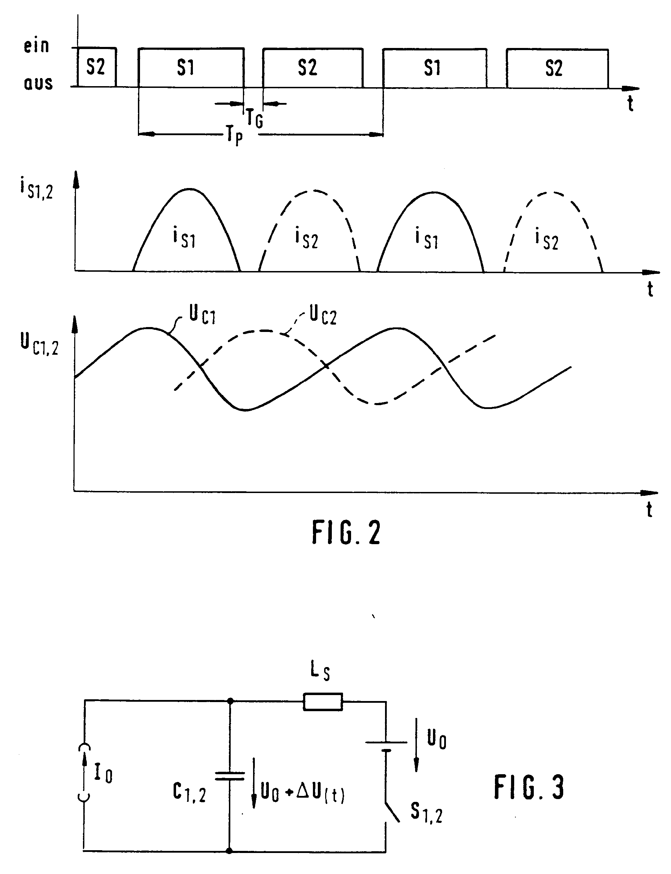

Das Schaltspiel der Gegentaktschalter S1 und S2 zeigt die Figur 2 erste Zeile. Während einer Periodendauer $T_p$ werden die Schalter S1 und S2 abwechselnd eingeschaltet. Während einer Lückzeit $T_G$ sind beide Schalter stromlos. Diese Lückzeit $T_G$ wird vorzugsweise so gewählt, daß in dieser Zeit das Resonanzgebilde in Form des Gegentaktwandlers gegebenenfalls unter Einbeziehung von parasitären Wicklungskapazitäten oder Gleichrichterkapazitäten umschwingen kann. Zur Aufbereitung der Steuersignale für die Schalter S1 und S2 unter Berücksichtigung der Lückzeit $T_G$ kann eine Steuereinrichtung gemäß der EP 77 958 B1 verwendet werden. Die Ströme $i_{s1}$ und $i_{s2}$ in den primärseitigen Gegentaktzweigen sind in Figur 2, Zeile 2 dargestellt ($i_{s2}$

2

gestrichelt). Figur 2 Zeile 3 zeigt die Spannungen $U_{c1}$ bzw. $U_{c2}$ an den Resonanzkondensatoren C1, C2. Das Ersatzschaltbild für einen Gegentaktzweig zeigt Figur 3. Der Eingangsstrom $I_o$ des Gegentaktwandlers ist durch eine Stromquelle dargestellt. Der Transformator Tr ist durch seine Streuinduktivität $L_s$ repräsentiert. Die Spannung $U_o$ stellt die vom Sekundärkreis aus transformierte Ausgangsspannung dar. Am Resonanzkondensator C1, bzw. C2 liegt dann die Spannung $U_o + \Delta U_{(t)}$. Für den Strom $i_{L(t)}$ im Resonanzkreis gilt folgende Beziehung:

$$i_{L(t)} = I_o (1 - \cos\omega t) + \frac{\Delta U}{\sqrt{L_s/C1,2}} \sin\omega t$$

mit

$$\omega \approx \frac{1}{\sqrt{L_s \cdot C1,2}}.$$

Mit

$$\Delta U = \frac{I_o}{2\,C1,2} (T_p/2 * T_G)$$

gilt:

$$i_{L(t)} = I_o \left[ 1 - \cos\omega t + \left( \frac{T_p}{4} + \frac{T_G}{2} \right) \frac{1}{\sqrt{L_s \cdot C1,2}} \cdot \sin\omega t \right].$$

Für Verschiedene Werte von

$$Z = \frac{\Delta U}{\sqrt{L_s/C1,2}}$$

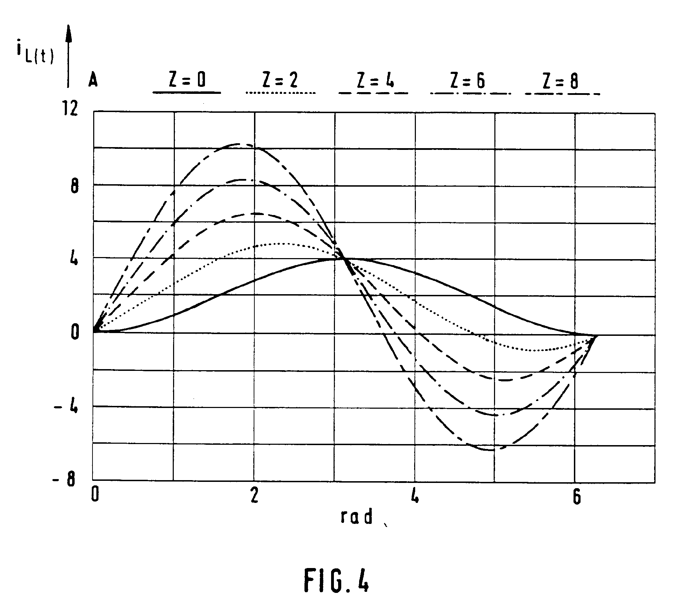

ist in Figur 4 der Umschwingstrom $i_{L(t)}$ dargestellt. Je höher der Wert Z gewählt wird, umso höher ist die Resonanzüberhöhung. Es ist vorteilhaft den Wert Z möglichst groß zu wählen, um einen steilen Nulldurchgang des Stromes zu erhalten und um so ein sicheres Schalten zu erreichen.

Zur Erzeugung des Regelsignals für die Hochsetzsteller AR1 und AR2 ist eine gemeinsame Steuerschaltung St vorgesehen mittels derer die Stellglieder S3 und S4 abwechselnd einschaltbar sind. Die Steuerschaltung St enthält einen Pulsbreitenmodulator PBM. Als Steuerkriterien für den Pulsbreitenmodulator PBM werden die Spannungen an den Resonanzkondensatoren C1 und C2 herangezogen sowie der Energieaufnahmestrom $i_A$ des Schaltreglers, der zwischen der Eingangsgleichspannungsquelle und dem gemeinsamen eingangsseitigen Zusammenschaltpunkt der beiden Hochsetzsteller AR1 und AR2 fließt. Alternativ hierzu können auch, wie in Figur 1 dargestellt, die von jedem der Hochsetzsteller AR1 und AR2 aufgenommen Ströme mittels je eines Stromwandlers SW1 und SW2 erfaßt und mittels der beiden Gleichrichter D5, D6 gleichgerichtet werden. Die Ausgänge der beiden Gleichrichter D5, D6 sind zusammengeschaltet und auf einen gemeinsamen Widerstand RM geführt, der in Serie zu einer Sägezahnspannungsquelle QSZ an den invertierenden Eingang des als Komparator ausgebildeten Pulsbreitenmodulators PBM angeschlossen ist. Die getrennte Erfassung der Ströme der Hochsetzsteller AR1 und AR2 hat den Vorteil, daß Unsymmetrien in den Schaltzeiten der beiden Schalter S3 und S4 nicht zu Fehlern führen können. Der nichtinvertierende Eingang des Pulsbreitenmodulators PBM ist mit dem Ausgang eines Fehlersignalverstärkers FV verbunden, welcher das andere Schaltkriterium - hier die Spannungen an den Resonanzkondensatoren C1, C2 - mit einer Referenzspannung Ur vergleicht. Die Funktionsweise dieser Steuerschaltung St kann der US 5,001,413 entnommen werden. Die Länge des Steuerpulses für die Schaltregler-Stellglieder S3 und S4 ist demnach von der Höhe des Energieaufnahmestromes $i_A$ bzw. der Energieaufnahmeströme der einzelnen Hochsetzsteller und der Höhe des Fehlersignals am Ausgang des Fehlersignalverstärkers FV abhängig. Zur Gewinnung des resonanzkondensatorabhängigen Steuerkriteriums ist ein Summiernetzwerk bestehend aus den Widerständen R1, R2, R3, R4, vorgesehen, mittels dessen eine Spannung UCD gewonnen wird, die proportional zur Summe der addierten Spannungen an den Resonanzkondensatoren C1 und C2 ist. Der Kondensator C3 parallel zum Spannungsteiler R3, R4 dient zur Integration der addierten Spannungen.

Zur Gewinnung der Gegentaktimpulse für die Schalter S3 und S4 kann eine gebräuchliche Impulsteilerstufe am Ausgang des Pulsbreitenmodulators PBM benutzt werden, die beispielsweise wie in der US 5,001,413 aus zwei AND-Gattern G1 und G2 sowie aus einem Gegentakt-Flip-Flop FF aufgebaut ist.

**Patentansprüche**

1. Schaltregler mit einem als Resonanzwandler ausgebildeten Gegentaktwandler (GW), dem ein getakteter Vorregler (AR1, AR2) vorgeschaltet ist, wobei getrennte Primärwicklungen (w1,w2) für den Gegentaktwandler-Transformator vorgesehen sind, dadurch gekennzeichnet, daß die Primärwicklungen (w1, w2) des Gegentaktwandler-Transformators (Tr) galvanisch voneinander getrennt sind, daß jedem Gegentaktzweig des Gegentaktwandlers ein Hochsetzsteller (AR1, AR2) vorgeschaltet ist und daß jeder Gegentaktzweig aus der Serienschaltung einer der Längsinduktivitäten (L1, L2) der Hochsetzsteller (AR1, AR2), einer Primärwicklung des Gegentaktwandler-Transformators (Tr), einem der Gegentaktschalter (S1; S2) sowie dem Ausgangskondensator des entsprechenden Hochsetzstellers als Resonanzkondensator (C1; C2) besteht.

2. Schaltregler nach Anspruch 1, dadurch gekennzeichnet, daß die beiden Hochsetzsteller (AR1, AR2) parallel an einer Eingangsgleichspannungsquelle (QE) betreibbar sind.

3. Schaltregler nach Anspruch 1 oder 2, dadurch gekennzeichnet, daß die Stellglieder (S3, S4) der beiden Hochsetzsteller (AR1, AR2) über eine gemeinsame Steuerschaltung (St) abwechselnd einschaltbar sind.

4. Schaltregler nach einem der Ansprüche 1 bis 3, dadurch gekennzeichnet, daß die Längsinduktivitäten (L1, L2) der Hochsetzsteller (AR1, AR2) leicht magnetisch gekoppelt sind.

5. Schaltregler nach einem der Ansprüche 1 bis 4, dadurch gekennzeichnet, daß die Resonanzkondensatoren (C1, C2) der Gegentaktzweige an die Verbindungsleitung zwischen einer Längsinduktivität (L1, L2) eines Hochsetzstellers und einer Primärwicklung (w1; W2) einerseits und an den primärwicklungsfernen Zusammenschaltpunkt der beiden Gegentaktschalter (S1, S2) andererseits angeschlossen sind.

6. Schaltregler nach Anspruch 3, dadurch gekennzeichnet, daß der Steuerschaltung (St) für die beiden Hochsetzsteller (AR1, AR2) als Steuerkriterium mindestens eine der Spannungen an den Resonanzkondensatoren (C1, C2) zuführbar ist.

7. Schaltregler nach Anspruch 6, gekennzeichnet durch ein Summiernetzwerk (R1, R2, R3, R4, C3) für die beiden Spannungen an den Resonanzkondensatoren, welches gegebenenfalls unter Zwischenschaltung eines Fehlersignalverstärkers (FV) an einen Steuereingang des Pulsbreitenmodulators (PBM) für die beiden Hochsetzsteller (AR1, AR2) angeschlossen ist.

8. Schaltregler an einem der Ansprüche 1, 3, 6 oder 7, dadurch gekennzeichnet, daß der Steuerschaltung (St) für die beiden Hochsetzsteller (AR1, AR2) als weiteres Steuerkriterium der aufgenommene Strom ($i_A$) des Schaltreglers oder ein davon abgeleitetes Signal zuführbar ist, dem gegebenenfalls ein Sägezahnsignal überlagert ist.

9. Schaltregler nach einem der Ansprüche 1, 3, 6 oder 7, dadurch gekennzeichnet, daß der Steuerschaltung (St) für die beiden Hochsetzsteller (AR1, AR2) als weiteres Steuerkriterium jeweils die von den Hochsetzstellern (AR1, AR2) aufgenommenen Ströme oder ein davon abgeleitetes Signal zuführbar ist, dem gegebenenfalls ein Sägezahnsignal überlagert ist.

10. Schaltregler nach einem der Ansprüche 1 bis 9, dadurch gekennzeichnet, daß die Gegentaktschalter (S1, S2) mit einer Lückzeit betreibbar sind, während der beide Schalter (S1, S2) gleichzeitig stromlos sind und daß diese Lückzeit ($T_G$) derart bemessen ist, daß einerseits der Gegentaktwandler (GW) als Resonanzgebilde sicher umschwingen kann und andererseits für das Nachladen des jeweiligen Resonsanzkondensators (C1; C2) ausreichend Zeit zur Verfügung steht.

**Claims**

1. A switching regulator with a push-pull converter (GW) embodied in the form of a resonance converter, to which a clocked pre-regulator (AR1, AR2) is series-connected, wherein separate primary windings (w1, w2) are provided for the push-pull converter transformer, characterized in that the primary windings (w1, w2) of the push-pull converter transformer (Tr) are galvanically separated from each other, that a boost regulator (AR1, AR2) is series-connected with each push-pull branch of the push-pull converter, and that each push-pull branch consists of the series connection of one of the series inductances (L1, L2) of the boost regulators (AR1, AR2), of a primary winding of the push-pull converter transformer (Tr), one of the push-pull switches (S1; S2) as well as the output capacitance of the corresponding boost regulator as resonance capacitor (C1; C2).

2. A switching regulator in accordance with claim 1, characterized in that the two boost regulators (AR1, AR2) can be operated in parallel from an input dc-voltage source (QE).

3. A switching regulator in accordance with claim 1 or 2, characterized in that the actuators (S3, S4) of the two boost regulators (AR1, AR2) can be alternatingly activated via a common control circuit (St).

4. A switching regulator in accordance with one of claims 1 to 3, characterized in that the series inductances (L1, L2) of the boost regulators (AR1, AR2) are loosely magnetically coupled.

5. A switching regulator in accordance with one of claims 1 to 4, characterized in that the resonance capacitor (C1, C2) of the push-pull branches are connected on the one side to the connecting lines between a series inductance (L1, L2) of a boost regulator and a primary winding (w1; w2), and on the other side to the connecting point, remote from the primary winding, of the two push-pull switches (S1, S2).

6. A switching regulator in accordance with claim 3, characterized in that at least one of the voltages at the resonance capacitors (C1, C2) can be supplied as the control criteria to the control circuit (St) for the two boost regulators (AR1, AR2).

7. A switching regulator in accordance with claim 6, characterized by a summator net (R1, R2, R3, R4, C3) for the two voltages at the resonance capacitors which is connected, if required with the interposition of an error signal amplifier (FV), to a control input of the pulse width modulator (PBM) for the two boost generators (AR1, AR2).

8. A switching regulator in accordance with one of claims 1, 3, 6 or 7, characterized in that the absorbed current ($i_A$) of the switching regulator or a signal derived therefrom, on which a sawtooth signal has been superimposed if required, can be supplied as further control criteria to the control circuit (St) for the two boost regulators (AR1, AR 2).

9. A switching regulator in accordance with one of claims 1, 3, 6 or 7, characterized in that the currents respectively absorbed by the boost generators (AR1, AR2) or a signal derived therefrom, on which a sawtooth signal has been superimposed if required, can be supplied as further control criteria to the control circuit (St) for the two boost regulators (AR1, AR 2).

10. A switching regulator in accordance with one of claims 1 to 9, characterized in that the push-pull switches (S1, S2) can be operated with a blackout time during which both switches (S1, S2) are currentless at the same time, and that this blackout time ($T_G$) is of such a duration that, on the one hand, the push-pull converter (GW) as a resonance structure can assuredly reverse and, on the other hand, there is sufficient time available for recharging the respective resonance capacitor (C1; C2).

**Revendications**

1. Régulateur à découpage comprenant un convertisseur en push-pull (GW) réalisé comme un convertisseur à résonance et précédé d'un prérégulateur (AR1, AR2) rythmé, avec prévision d'enroulements primaires (w1, w2) séparés pour le transformateur du convertisseur en push-pull, caractérisé en ce que les enroulements primaires (w1, w2) du transformateur (Tr) du convertisseur en push-pull sont séparés galvaniquement l'un de l'autre, que chaque branche push-pull du convertisseur en push-pull est précédée d'un élévateur de tension (AR1, AR2) et que chaque branche push-pull est formée du montage en série d'une des inductances série (L1, L2) des élévateurs de tension (AR1, AR2), d'un enroulement primaire du transformateur (Tr) du convertisseur en push-pull, d'un des interrupteurs push-pull (S1; S2) ainsi que du condensateur de sortie de l'élévateur de tension correspondant en tant que condensateur à résonance (C1; C2).

**2.** Régulateur à découpage selon la revendication 1, caractérisé en ce que les deux élévateurs de tension (AR1, AR2) peuvent être alimentés en parallèle à partir d'une source de tension continue d'entrée (QE).

**3.** Régulateur à découpage selon la revendication 1 ou 2, caractérisé en ce que les éléments de réglage (S3, S4) des deux élévateurs de tension (AR1, AR2) sont enclenchables alternativement au moyen d'un circuit de commande (St) commun.

**4.** Régulateur à découpage selon une des revendications 1 à 3, caractérisé en ce que les inductances série (L1, L2) des élévateurs de tension (AR1, AR2) sont faiblement couplées magnétiquement.

**5.** Régulateur à découpage selon une des revendications 1 à 4, caractérisé en ce que les condensateurs à résonance (C1, C2) des branches push-pull sont raccordés d'une part à la ligne de connexion entre une inductance série (L1, L2) d'un élévateur de tension et un enroulement primaire (w1; w2) et d'autre part au point d'interconnexion, éloigné des enroulements primaires, des deux interrupteurs push-pull (S1, S2).

**6.** Régulateur à découpage selon la revendication 3, caractérisé en ce qu'au moins l'une des tensions apparaissant aux bornes des condensateurs à résonance (C1, C2) est applicable en tant que critère de commande au circuit de commande (St) pour les deux élévateurs de tension (AR1, AR2).

**7.** Régulateur à découpage selon la revendication 6, caractérisé par un réseau de sommation (R1, R2, R3, R4, C3) pour les deux tensions aux bornes des condensateurs à résonance, réseau qui est éventuellement raccordé avec interposition d'un amplificateur de signaux d'erreur (FV) à une entrée de commande du modulateur d'impulsions en durée (PBM) pour les deux élévateurs de tension (AR1, AR2).

**8.** Régulateur à découpage selon une des revendications 1, 3, 6 ou 7, caractérisé en ce que le courant ($i_A$) absorbé par le régulateur à découpage, ou un signal dérivé de ce courant, auquel est superposé éventuellement un signal en dents de scie, est applicable en tant que critère de commande supplémentaire au circuit de commande (St) pour les deux élévateurs de tension (AR1, AR2).

**9.** Régulateur à découpage selon une des revendications 1, 3, 6 ou 7, caractérisé en ce que les courants absorbés par les élévateurs de tension (AR1, AR2), ou un signal dérivé de ces courants, auquel est superposé éventuellement un signal en dents de scie, est applicable en tant que critère de commande supplémentaire au circuit de commande (St) pour les deux élévateurs de tension (AR1, AR2).

**10.** Régulateur à découpage selon une des revendications 1 à 9, caractérisé en ce que les interrupteurs push-pull (S1, S2) sont utilisables avec un temps d'interruption pendant lequel les deux interrupteurs (S1, S2) sont simultanément sans courant, et que ce temps d'interruption ($T_G$) est choisi pour que, d'une part, le convertisseur en push-pull (GW), en tant que dispositif à résonance, puisse passer avec certitude à l'autre état et que, d'autre part, il y ait suffisamment de temps disponible pour recharger le condensateur à résonance (C1, C2) concerné.

6

FIG.1

FIG. 2

FIG. 3

FIG. 4